(19) Europäisches Patentamt / European Patent Office / Office européen des brevets

(11) **EP 1 817 816 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
*H01Q 1/32* (2006.01)  *G07C 9/00* (2006.01)
*H04B 7/06* (2006.01)

(21) Anmeldenummer: **05797228.3**

(22) Anmeldetag: **05.10.2005**

(86) Internationale Anmeldenummer:
**PCT/DE2005/001775**

(87) Internationale Veröffentlichungsnummer:
**WO 2006/060974 (15.06.2006 Gazette 2006/24)**

(54) **SENDEVORRICHTUNG FÜR MEHRERE ZUEINANDER PARALLELE, UNABHÄNGIG VONEINANDER ÜBER JE EINE ZULEITUNG VERSORGBARE ANTENNEN**

TRANSMITTING DEVICE FOR A PLURALITY OF PARALLEL ANTENNA THAT ARE INDEPENDENTLY FED VIA RESPECTIVE FEED LINES

DISPOSITIF D'EMISSION DESTINE A PLUSIEURS ANTENNES PARALLELES ENTRE ELLES, QUI PEUVENT ETRE ALIMENTEES INDEPENDAMMENT LES UNES DES AUTRES PAR UNE LIGNE D'ALIMENTATION RESPECTIVE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.12.2004 DE 102004058613**

(43) Veröffentlichungstag der Anmeldung:
**15.08.2007 Patentblatt 2007/33**

(73) Patentinhaber: **Conti Temic microelectronic GmbH**
**90411 Nürnberg (DE)**

(72) Erfinder: **TENCONI, Bernard**
**D-78532 Tuttlingen (DE)**

(74) Vertreter: **Büchner, Jörg**
**Conti Temic microelectronic GmbH**
**Sieboldstr. 19**
**90411 Nürnberg (DE)**

(56) Entgegenhaltungen:
**WO-A-20/04001681     WO-A-20/04097749**
**DE-A1- 10 004 616     DE-A1- 19 743 993**

• **PATENT ABSTRACTS OF JAPAN Bd. 2003, Nr. 12, 5. Dezember 2003 (2003-12-05) -& JP 2003 347958 A (MURATA MFG CO LTD), 5. Dezember 2003 (2003-12-05)**

**Beschreibung**

Die Erfindung betrifft eine Sendevorrichtung für mehrere zueinander parallele unabhängig voneinander über je eine Zuleitung versorgbare Antennen. Derzeit werden für derartige Sendevorrichtungen Schaltmittel in Serie in den Zuleitungen der Antennen verwendet und so der Stromfluß zu den jeweils anzusteuernden Antennen freigegeben, wie dies bspw. der WO 2004/001681 zu entnehmen ist. Das Schaltmittel ist dabei auf der Lowside zum Massepotential hin angeordnet. Dabei werden zwar die Stromkreise zu den-inaktiven Antennen unterbrochen, jedoch ist die Sendespannung der Sendefrequenz über die Zuleitung vorhanden.

Ein Highside-Schalter zwischen Erregerschaltung und Antenne weist keinen Massebezug auf und ist somit schwierig halbleitertechnisch realisierbar.

Die DE 100 04 616 A1 weist eine Relaisschaltung zum Kurzschließen der inaktiven Antennen auf, die ebenfalls nicht ohne weiteres halbleitertechnisch realisiert werden kann.

Aufgabe der Erfindung ist es daher, eine alternative Sendevorrichtung vorzustellen, die einfach zu realisieren und zudem keine Einkopplungen aufweist.

Diese Aufgabe ist durch die Merkmale des Anspruchs 1 gelöst. Vorteilhafte Weiterbildungen sind den Unteransprüchen zu entnehmen.

Grundgedanke ist, die inaktiven Antennen durch ein dazu paralleles steuerbares Schaltmittel auf Masse hin zu überbrücken.

Die einzelnen Zuleitungen weisen jeweils Kondensatoren zur Entkopplung auf, die bei der Berechnung der Frequenz des Bandpasses zu berücksichtigen sind und daher in ihrer Gesamtheit den kapazitiven Bestandteil des Bandpasses vollständig bilden können, so daß kein weiterer Kondensator erforderlich ist.

Die Erfindung wird nachfolgend anhand von Ausführungsbeispielen und Figuren näher beschrieben. Es zeigen:

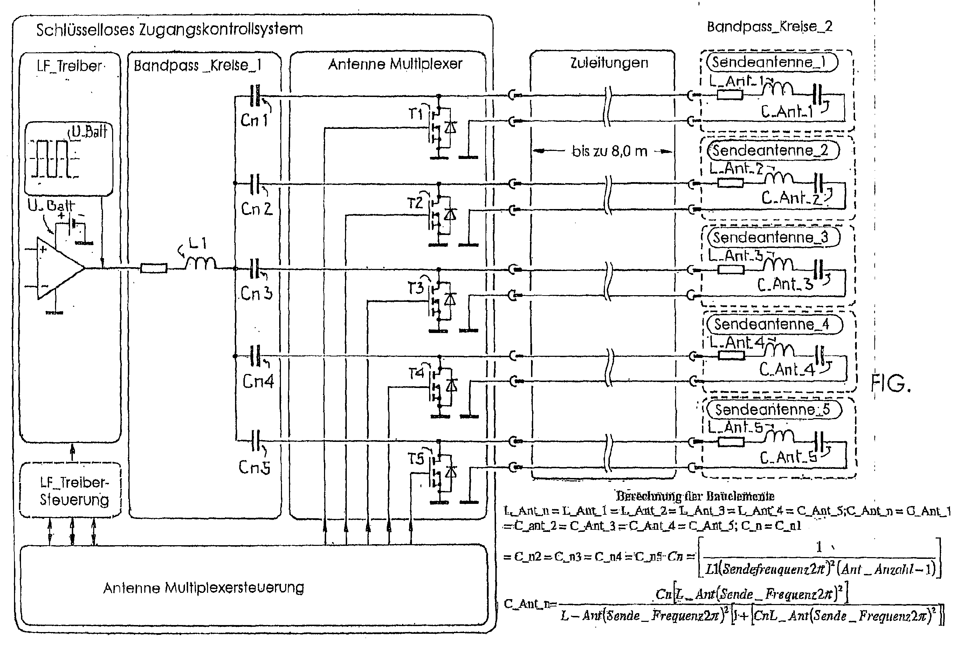

Fig. 1    Schaltbild eines Zugangsüberwachungssystems mit 5 Sendeantennen

Das Beispiel zeigt 5 Sendeantennen eines Zugangsüberwachungssystems in einem Kraftfahrzeug, bspw. einem sogenannten Keyless-Entry-System zum schlüssellosen Öffnen und Schließen der Zentralverriegelung in Abhängigkeit von der Anwesenheit eines Transponders.

Wenn die Sendeantenne_1 aktiv sein soll wird der Multiplexer-Transistor T1 ausgeschaltet (hochohmig), alle restlichen Sendeantennen (_2, _3, _4, und _5) werden ausgeschaltet, in dem die Multiplexer-Transistoren T2, T3, T4, T5 eingeschaltet sind (niederohmig) sind. Somit sind keine Sendesignale am Ausgang der ausgeschalteten Antenne bzw. deren Zuleitung mehr.

Dabei ist die Sendeantenne über C1 C_ant_1 auf Resonanz abgestimmt.

$$\text{Frequenz\_Send\_Antenne} = \frac{1}{(2 \bullet \pi) \bullet \sqrt{L\_Ant \bullet \left[ \dfrac{(Cn \bullet C\_Ant\_n)}{Cn + C\_Ant\_n} \right]}}$$

Die Resonanzfrequenz des ersten Bandpasses ist:

$$\text{F\_Res\_erste\_BP} = \frac{1}{(2 \bullet \pi) \bullet \sqrt{L1 \bullet (Cn \bullet Ant\_Anzahl - 1)}}$$

Vorteil dieses Antennenmultiplexers ist, daß an der Zuleitung der ausgeschalteten Antenne keine Signalspannung vorhanden ist, im Gegensatz zur Realisierung "Strom-Schalter Multiplexer", wo nur die Stromkreise unterbrochen werden und somit die Sendespannung der Sendefrequenz jedoch über die Zuleitung vorhanden ist. Zudem lassen sich diese Schaltmittel einfach halbleitertechnisch realisieren und ansteuern.

Ausgehend von annähernd gleichen elektrischen Parametern (L_Ant und C_Ant) aller Sendeantennen ergibt sich die Kapazität der in Serie zu jeweils einer Sendeantenne liegenden Kondensatoren Zannähernd gemäß der Formeln:

$$Cn = \left[ \frac{1}{L1 \cdot (Sende\_Frequenz \cdot 2 \cdot \pi)^2 \cdot (Ant\_Anzahl - 1)} \right]$$

$$C\_Ant\_n = \frac{Cn \left[ L\_Ant \cdot (Sende\_Frequenz \cdot 2 \cdot \pi)^2 \right]}{L\_Ant \cdot (Sende\_Frequenz \cdot 2 \cdot \pi)^2 \left[ 1 + \left[ Cn \cdot L\_Ant \cdot (Sende\_Frequenz \cdot 2 \cdot \pi)^2 \right] \right]}$$

**Patentansprüche**

1. Sendevorrichtung für mehrere zueinander parallele, unabhängig voneinander über je eine Zuleitung versorgbare Antennen (Sendeantenne_1, Sendeantenne_2,...), wobei eine gemeinsame Erregerschaltung (LF-Treiber, Bandpass-Kreise_1) und ein Multiplexer zur selektiven Zuschaltung zumindest einer der Antennen vorgesehen ist, **dadurch gekennzeichnet, daß**

   a) in jeder Zuleitung ein Kondensator (Cn1,Cn2,...) in Serie zur Antenne (Sendeantenne_1,...) vorgesehen ist, und
   b) für jede Antenne ein steuerbarer Transistor (T1,T2,...) vorgesehen ist, durch welchen die Zuleitung zwischen Kondensator (Cn1,Cn2,...) und Antenne (Sendeantenne_1, Sendeantenne_2,...) auf Massepotential verbindbar ist.

2. Sendevorrichtung nach Anspruch 1, wobei die Kondensatoren (Cn1,Cn2,...) in den Zuleitungen den kapazitiven Bestandteil des Bandpasses der Erregerschaltung (Bandpass-Kreise_1) bilden.

3. Verfahren zum Betreiben einer Sendevorrichtung nach einer der vorangehenden Ansprüche, wobei für die anzusteuernde(n) Antenne(n) (Sendeantenne_1, Sendeantenne_2,...) das Schaltmittel geöffnet (T1,T2,...) und für die restlichen Antennen das Schaltmittel geschlossen und die Antennen damit auf Bezugspotential kurzgeschlossen werden.

4. Zugangsüberwachungssystem, insbesondere für Kraftfahrzeuge mit einer Sendevorrichtung nach einem der vorangehenden Ansprüche.

**Claims**

1. A transmission device for several antennae which are arranged in parallel to each other and which can be supplied respectively via one feed line (transmission antenna_1, transmission antenna_2 etc.), wherein a shared excitation circuit (LF driver, band pass circuits_1) and a multiplexer for selective connection of at least one of the antennae is provided, **characterized in that**

   a) in each feed line, a capacitor (Cn1,Cn2, ...) is provided in series to the antenna (transmission antenna_1, etc.),
   b) for each antenna, a controllable transistor (T1, T2 etc.) is provided, by means of which the feed line between the capacitor (Cn1, Cn2 etc.) and the antenna (transmission antenna_1, transmission antenna_2 etc.) can be connected to earth potential.

2. A transmission device according to claim 1, wherein the capacitors (Cn1, Cn2 etc.) in the feed lines form the capacitive component of the band pass of the excitation circuit (band pass circuits_1).

3. A method for operating a transmission device according to any one of the preceding claims, wherein for the antenna (e) to be triggered, (transmission antenna_1, transmission antenna_2 etc.), the switching means is opened (T1, T2 etc.) and for the remaining antennae, the switching means is closed and the antennae are thus shortcircuited to reference potential.

4. An access monitoring system, in particular for motor vehicles, with a transmission device according to any one of the preceding claims.

**Revendications**

1. Dispositif d'émission pour plusieurs antennes parallèles entre elles, alimentées indépendamment les unes des autres respectivement via une ligne d'alimentation (antenne d'émission_1, antenne d'émission_2, ...), un circuit d'excitation commun (circuit d'attaque LF, circuits de filtre passe-bande_1) et un multiplexeur pour la connexion sélective d'au moins une des antennes étant prévus, **caractérisé en ce que**

   a) il est prévu dans chaque ligne d'alimentation un condensateur (Cn1, Cn2, ...) en série avec l'antenne (antenne d'émission_1, ...),
   b) il est prévu pour chaque antenne un transistor commandé (T1, T2, ...) par lequel la ligne d'alimentation entre le condensateur (Cn1, Cn2, ...) et l'antenne (antenne d'émission_1, antenne d'émission_2, ...) peut être raccordée au potentiel de référence.

2. Dispositif d'émission selon la revendication 1, les condensateurs (Cn1, Cn2, ...) formant dans les lignes d'alimentation la composante capacitive du filtre passe-bande du circuit d'excitation (circuits de filtre passe-bande_1).

3. Procédé de mise en oeuvre d'un dispositif d'émission selon une des revendications précédentes, le moyen de commutation (T1, T2, ...) étant ouvert pour l'antenne/les antennes à piloter (antenne d'émission_1, antenne d'émission_2, ...), et le moyen de commutation étant fermé pour les antennes restantes, et les antennes étant ainsi mises en court-circuit au potentiel de référence.

4. Système de surveillance d'accès, en particulier pour des véhicules automobiles avec un dispositif d'émission selon une des revendications précédentes.

Schlüsselloses Zugangskontrollsystem

Bandpass_Kreise_2

LF_Treiber

Bandpass_Kreise_1

Antenne Multiplexer

Zuleitungen

Sendeantenne_1

L_Ant_1

C_Ant_1

U_Balt

U_Balt
+

Cn 1

T1

bis zu 8,0 m

Sendeantenne_2

L_Ant_2

C_Ant_2

Cn 2

T2

L1

Sendeantenne_3

L_Ant_3

C_Ant_3

Cn 3

T3

Sendeantenne_4

L_Ant_4

C_Ant_4

Cn4

T4

Sendeantenne_5

L_Ant_5

C_Ant_5

LF_Treiber-
Steuerung

Cn5

T5

Berechnung der Bauelemente

$L\_Ant\_n = L\_Ant\_1 = L\_Ant\_2 = L\_Ant\_3 = L\_Ant\_4 = C\_Ant\_5 ; C\_Ant\_n = C\_Ant\_1$
$= C\_ant\_2 = C\_Ant\_3 = C\_Ant\_4 = C\_Ant\_5 ; C\_n = C\_n1$

Antenne Multiplexersteuerung

$= C\_n2 = C\_n3 = C\_n4 = C\_n5 \cdot Cn = \left[ \dfrac{1}{L1(Sendefrequenz\,2\pi)^2 (Ant\_Anzahl - 1)} \right]$

$C\_Ant\_n = \dfrac{Cn\left[L\_Ant(Sende\_Frequenz\,2\pi)^2\right]}{L\_Ant(Sende\_Frequenz\,2\pi)^2\left[1 + \left[CnL\_Ant(Sende\_Frequenz\,2\pi)^2\right]\right]}$

FIG.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004001681 A

- DE 10004616 A1